# EUROPÄISCHE PATENTANMELDUNG

(11) **EP 0 815 954 A2**
(43) Veröffentlichungstag der Anmeldung: **07.01.1998**
(21) Anmeldenummer: 97110502.8
(22) Anmeldetag: 26.06.1997
(51) Int. Cl.: B06B 1/06

(54) **Schallwandler, insbesondere Ultraschallwandler**

(30) Priorität: 04.07.1996 DE 29611678 U
(71) Anmelder: SIEMENS AKTIENGESELLSCHAFT, 80333 München (DE)
(72) Erfinder: Kroemer, Nils, 09337 Hohenstein-Ernstthal (DE); Russwurm, Winfried, 93049 Regenburg (DE); Von Jena, Alexander, 81541 München (DE)

(57) **Zusammenfassung**

Ein Schallwandler besitzt erfindungsgemäß ein becherförmiges Gehäuse (1, 2), dessen Innenwand mit einer Isolierschicht (9) und einem elektrischen Leiter (10) versehen ist, der die abstrahlseitige Elektrode (6) der Piezoscheibe (4) oder zumindest ein Mittel zur Einkopplung eines elektrischen Signals von einer Signalleitung (8) in die abstrahlseitige Elektrode (6) bildet. Durch den als Metallisierung ausgeführten elektrischen Leiter (10) wird eine gute elektromagnetische Abschirmung des Schallwandlers erreicht. Zudem können beide Elektroden (5, 6) einfach von der Oberseite des Schallwandlers her elektrisch kontaktiert werden.

Die Erfindung wird angewandt bei Ultraschall-Durchflußmessern.

## Beschreibung

Die Erfindung betrifft einen Schallwandler, insbesondere einen Ultraschallwandler, nach dem Oberbegriff des Anspruchs 1.

Ein typisches Anwendungsgebiet für derartige Schallwandler ist die Prozeßmeßtechnik, z. B. die Ultraschall-Durchflußmessung oder die Niveaumessung bei Flüssigkeiten. Ein weiteres ist die zerstörungsfreie Werkstückprüfung, zu der auch die Wanddickenmessung an Rohrleitungen gezählt werden kann. Bei diesen Anwendungen besteht oft die Forderung nach einer hohen Einsatztemperatur sowie einer hohen Resistenz gegenüber abrasiven oder korrosiven Prozeßmedien.

Aus der deutschen Gebrauchsmusteranmeldung mit dem amtlichen Aktenzeichen 295 09 574.1 ist ein Schallwandler bekannt, der an einer Rohrwandung oder in einer Öffnung einer Rohrwandung montierbar und für hohe Drücke und hohe Temperaturen geeignet ist. In einem zylinderförmigen Gehäuse ist koaxial eine Piezoscheibe angeordnet, die an ihrer Oberseite und an ihrer in die Schallausbreitungsrichtung weisenden Unterseite eine erste und eine zweite Elektrode aufweist, an welchen ein elektrisches Signal anlegbar ist. Die zweite Elektrode wird durch den Boden des becherförmigen Gehäuses aus Metall gebildet, der als Metallmembran ausgeführt ist. Flüssigkeiten oder Festkörper, mit denen der bekannte Schallwandler zur Messung physikalischer Größen oder Eigenschaften in Kontakt gebracht wird, sind häufig elektrisch leitfähig. Ist die aktive Piezokeramik des Schallwandlers mit anderen Wandlerkomponenten, insbesondere dem metallischen Gehäuse, elektrisch verbunden, so besteht eine galvanische Kopplung der Piezokeramik mit der Meßumgebung über das Schallausbreitungsmedium. In der Prozeßmeßtechnik, wo in komplexeren Systemen sehr viele Meßumformer, z. B. zur Ultraschall-Durchfluß-, Niveau-, Druck- oder Temperaturmessung, eingesetzt werden, ist eine galvanische Kopplung der Komponenten über das Meßmedium von Nachteil, da sie zu Schwierigkeiten bei der Signalverarbeitung führen kann.

Um diese Schwierigkeiten zu vermeiden, wird in der oben genannten Gebrauchsmusteranmeldung vorgeschlagen, die Elektroden und die Signalleitungen elektrisch gegenüber Gehäuse und Meßmedium zu isolieren, wobei die Unterseite der Piezoscheibe zur Schallübertragung akustisch mit einer Scheibe aus elektrisch isolierendem Material gekoppelt ist, die unterhalb der Zweiten Elektrode angeordnet ist. In einer beschriebenen Ausführungsform bildet die Bodenplatte des becherförmigen Gehäuses selbst die Scheibe aus elektrisch isolierendem Material, in einer anderen Ausführungsform muß zusätzlich zwischen der Bodenplatte, die elektrisch leitend ist, und der unteren Elektrode der Piezoscheibe eine Scheibe aus elektrisch isolierendem Material eingesetzt werden. In beiden Fällen sind besondere Maßnahmen zu treffen, die eine gute akustische Kopplung gewährleisten. Die Isolierscheibe ist durch eine Klebe- oder Preßverbindung akustisch mit der Piezoscheibe sowie dem Gehäuseboden gekoppelt. Nachteilig hierbei ist, daß die Isolierscheibe selbst bei sehr guter akustischer Kopplung eine Störstelle für die Schallausbreitung darstellt. Zudem unterliegen die Koppelflächen der Alterungsgefahr, so daß eine hinreichende Langzeitstabilität des Schallwandlers nicht immer gewährleistet werden kann. Maßnahmen zur elektromagnetischen Abschirmung der Piezoscheibe sind nicht beschrieben.

Bei beiden Ausführungsformen ist die abstrahlseitige Elektrode auf die Oberseite der Piezoscheibe hervmzuführen, so daß beide Signalleitungen zur Einkopplung eines elektrischen Signals auf der Oberseite angebracht werden können. Nachteilig dabei ist, daß ein entsprechender Flächenabschnitt der Elektrode auf der Oberseite entfernt werden muß. Das Herumführen der abstrahlseitigen Elektrode kann beispielsweise durch eine über die Stirnfläche der Piezoscheibe gezogene leitfähige Schicht oder auch durch ein Mittenloch mit einer Durchkontaktierung erfolgen Im ersten Fall ist die Störung der Symmetrie von Nachteil, im zweiten Fall erhöhen sich die Kosten der Piezoscheibe drastisch. zudem ist bei beiden Ausführungen nachteilig, daß aktive Wandlerfläche verlorengeht, so daß der Signal-Rausch-Abstand verringert wird.

Ein weiterer Nachteil besteht darin, daß lediglich der Gehäuseboden, nicht jedoch die Innenwand eines zylindrischen Gehäuses aus Metall durch ein elektrisch isolierendes Material abgedeckt ist. Somit ist die Gefahr eines Kurzschlusses zwischen den Sensoranschlußleitungen und der Gehäusewand gegeben. Um diesen zu verhindern, ist entweder ein erhöhter seitlicher Abstand zwischen Piezoscheibe und Gehäusewand oder ein erhöhter Aufwand bei der Montage des Schallwandlers erforderlich.

Bei einer anderen beschriebenen Ausführungsform besteht nur der Boden des becherförmigen Gehäuses aus elektrisch isolierendem Material, die Seitenwand dagegen aus Metall. Durch Wegfall einer Klebe- oder Preßstelle und der akustisch störenden Isolierscheibe wird zwar eine bessere akustische Kopplung erreicht, das Problem eines möglichen seitlichen Gehäuseschlusses der Elektroden bleibt aber bestehen. Zudem führt die mechanische Verbindung von Boden und Seitenwand des Gehäuses zu einem erhöhten Aufwand und eventuell zu einem eingeschränkten Einsatzbereich.

Auf der Oberseite der Piezoscheibe wird ein schallabsorbierendes und mechanisch dämpfendes Material als sogenanntes "Backing" aufgebracht. Ziel dieser Maßnahme ist in erster Linie die Erhöhung der Wandlerbandbreite durch die mechanische Bedämpfung der aktiven Piezoscheibe. Als Material wird z. B. ein Epoxidharz eingesetzt, welches mit Metalloxidpulver gefüllt sein kann.

Der Erfindung liegt die Aufgabe zugrunde, einen Schallwandler, insbesondere einen Ultraschallwandler, zu schaffen, der sich bei einer galvanischen Entkopplung der elektrischen Anschlüsse der Piezoscheibe vom Gehäuse und seiner Umgebung am Einbauplatz durch eine gute elektromagnetische Abschirmung auszeichnet und kostengünstig herstellbar ist. Zudem soll ein hohes Übertragungsmaß und eine große Bandbreite erreicht werden.

Zur Lösung dieser Aufgabe weist der neue Schallwandler der eingangs genannten Art die im kennzeichnenden Teil des Anspruchs 1 angegebenen Merkmale auf. In den Unteransprüchen sind vorteilhafte Weiterbildungen der Erfindung beschrieben.

Die Erfindung hat den Vorteil, daß durch den elektrischen Leiter, welcher die Innenwand des Gehäuses im wesentlichen bedeckt, eine gute Abschirmung der Piezoscheibe gegenüber elektromagnetischen Störeinkopplungen erreicht wird. Darüber hinaus wird die Kontaktierung der in Schallabstrahlrichtung angeordneten Elektrode der Piezoscheibe stark vereinfacht. Die zugehörige Sensoranschlußleitung kann auf einfache Weise an der Innenwand des becherförmigen Gehäuses kontaktiert werden, vorteilhaft durch eine Lötverbindung. Die elektrische Verbindung zwischen dem Leiter und der abstrahlseitigen Elektrode der Piezoscheibe erfolgt kapazitiv oder durch Punktkontakt über die Klebe- oder Preßverbindung zwischen Piezoscheibe und Gehäuseboden. Als elektrischer Leiter kann vorteilhaft eine Metallschicht durch Bedampfen oder Sputtern aufgebracht werden. Die Dicke der Metallisierungsschicht liegt dabei in der Größenordnung von 100 nm und wirkt sich auf die akustische Kopplung kaum aus.

Wird ein becherförmiges Gehäuse aus Metall für den Schallwandler verwendet, so sind die Innenflächen des Gehäuses zum größten Teil mit einem elektrisch isolierenden Material beschichtet. Mit Vorteil kann ein keramisches Material, z. B. Aluminiumoxid, eingesetzt werden. Es bietet eine hohe Isolationsfestigkeit und ist für einen weiten Temperaturbereich geeignet. Die Schichtdicke liegt zwischen 10 µm und 0,5 mm. Das Isoliermaterial kann kostengünstig durch eine Spritztechnik aufgebracht werden. Dabei wird eine sehr gute materialschlüssige Verbindung erreicht. Dies wirkt sich vorteilhaft auf die akustische Kopplung der Piezoscheibe an dem Gehäuseboden aus, da ein Klebespalt entfällt.

Besteht das Gehäuse des Wandlers aus einem elektrisch isolierenden Material, z. B. Aluminiumoxid, so wirkt sich gegenüber einem metallischen Gehäuse vorteilhaft aus, daß sich die thermischen Ausdehnungskoeffizienten der Piezoscheibe, die üblicherweise aus Keramik besteht, und des Gehäuses nur geringfügig unterscheiden. Auf diese Weise werden thermische Spannungsbelastungen infolge von Temperaturschwankungen weitgehend vermieden. Die Innenflächen des Gehäuses sind zum größten Teil für eine gute elektrische Abschirmung metallisiert. Ein weiterer Vorteil dieses Ausführungsbeispiels besteht darin, daß eine akustisch störende Schicht zwischen der Piezoscheibe und dem Gehäuseboden entfällt. Für eine gute akustische Kopplung kann das keramische Gehäuse so ausgelegt werden, daß seine akustische Impedanz zwischen derjenigen der Piezoscheibe und der des Meßmediums liegt. Vorteilhaft ist weiterhin die sehr hohe Resistenz von keramischen Materialien gegenüber Korrosion und Abrasion. Dadurch können die Funktionssicherheit sowie die Lebensdauer des Schallwandlers wesentlich erhöht werden. Eine zu schnelle Abtragung des Gehäusebodens, welche die Übertragungseigenschaften eines Schallwandlers stark ändern und die Funktion des kompletten Meßsystems einschränken würde, wird vermieden.

Eine weiterverbesserte elektromagnetische Abschirmung wird durch ein rückseitiges Abschirmelement, welches mit dem elektrischen Leiter auf der Innenwand des Gehäuses elektrisch verbunden ist, erreicht. Das Abschirmelement kann vorteilhaft in Form eines Metallgewebes in ein rückwärtiges "Backing", welches einer Erhöhung der Bandbreite durch eine mechanische Bedämpfung der Piezoscheibe dient, eingebettet sein. Der geometrische Abstand ist dabei kleiner bemessen als der Radius der Piezoscheibe; er beträgt lediglich wenige Millimeter.

In einem weiteren Ausführungsbeispiel ist lediglich der Gehäuseboden aus einer Keramik, die übrigen Gehäuseteile aus Metall oder einem anderen temperaturbeständigen Material ausgeführt. Durch geeigneten Einbau des Gehäuses kommt lediglich der keramische Boden mit dem Meßmedium in Berührung. Daher kann für das übrige Gehäuse ein Material eingesetzt werden, welches keine erhöhte Resistenz gegenüber einer aggressiven Meßumgebung aufweisen muß. Dieses Material kann dann so ausgewählt werden, daß es eine geringere Schwingungsgüte und höhere akustische Dämpfung besitzt. Geeignete Materialien sind beispielsweise verschiedene Sintermetalle, Plasmakeramiken oder auch temperaturfeste Kunststoffe, insbesondere PTFE. Durch diese Ausführung wird eine verbesserte Körperschallentkopplung des Gehäuses von der Wandlereinspannung am Meßrohr erreicht. Dies ist vor allem bei Ultraschall-Durchflußmessern, bei denen sich eine Körperschallübertragung vom Sende- zum Empfangswandler über das Meßrohr negativ auf den Signal-Rausch-Abstand auswirkt, von Vorteil.

Anhand der Figuren, in denen Ausführungsbeispiele der Erfindung dargestellt sind, werden im folgenden die Erfindung sowie Ausgestaltungen und Vorteile näher erläutert.

Es zeigen:
- Figur 1: ein Schnittbild eines Schallwandlers mit Metallgehäuse,
- Figur 2: einen Schallwandler mit Keramikgehäuse,
- Figuren 3 und 4: Schallwandler mit angesetztem keramischem Gehäuseboden.

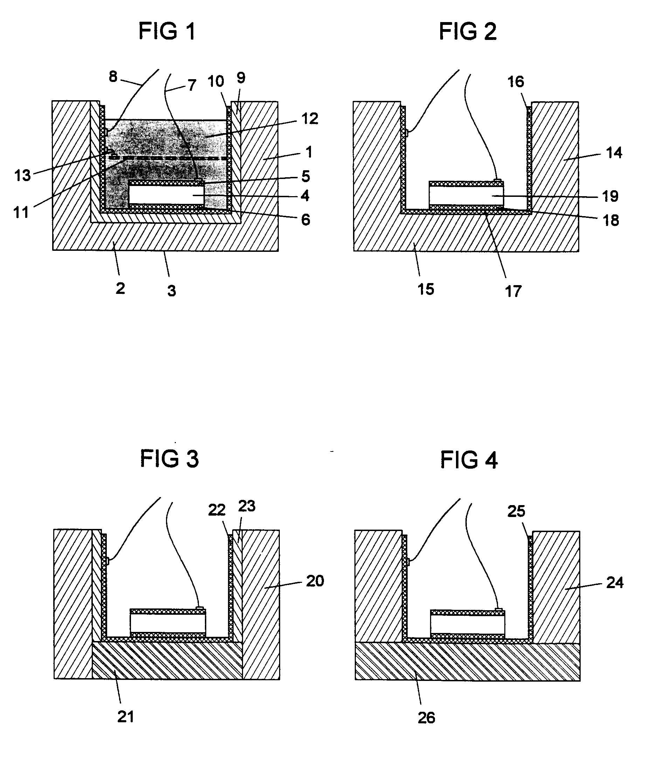

Ein Schallwandler weist gemäß Figur 1 ein becherförmiges Gehäuse aus Metall auf. Dieses besteht aus einer zylindrischen Wand 1 und einem Boden 2, dessen Unterseite 3 in Schallausbreitungsrichtung eine Abstrahlfläche bei einem Schallsender oder eine Eintrittsfläche bei einem Schallempfänger bildet. Innerhalb des Gehäuses ist am Becherboden eine Piezoscheibe 4 mit einer ersten Elektrode 5 und einer zweiten Elektrode 6 angeordnet, die flächenhaft im Bereich der Oberseite bzw. im Bereich der in Schallausbreitungsrichtung zu einem Meßmedium weisenden Unterseite der Piezoscheibe 4 ausgebildet sind und in welche über Signalleitungen 7 bzw. 8 ein elektrisches Signal einkoppelbar ist. Zur Vermeidung einer galvanischen Verbindung zwischen einer in Figur 1 nicht dargestellten Meßelektronik, zu der die Signalleitungen 7 und 8 führen, und weiteren Meßumformern über den Einbauplatz des Schallwandlers hinweg ist auf die Innenwand des Gehäuses eine Isolierschicht 9 aus Aluminiumoxid durch Spritzen aufgebracht. Die Innenseite dieser Isolierschicht 9 ist mit einer aufgedampften oder aufgesputterten Metallisierung 10 versehen, die zur Abschirmung der Piezoscheibe 4 gegen elektromagnetische Störeinflüsse der Umgebung dient. Diese Metallisierung 10 bildet einen elektrischen Leiter und ist durch die Isolierschicht 9 von dem Metallgehäuse galvanisch getrennt.

Eine weitere Verbesserung der elektromagnetischen Abschirmung wird durch ein Metallgaze 11 erreicht, das in ein Backing 12 aus einem mit Metalloxidpulver gefüllten Epoxidharz eingelagert ist. Durch eine Leitung 13 ist das Metallgaze 11 mit der Metallisierung 10 kurzgeschlossen. Die Signalleitung 8 ist an die Metallisierung 10 angelötet, so daß ein elektrisches Signal von der Signalleitung 8 über die Metallisierung 10 hinweg der abstrahlseitigen Elektrode 6 der Piezoscheibe 4 zugeführt wird. Durch die Metallisierung 10 wird also ermöglicht, beide Signalleitungen 7 und 8 von der Oberseite her an den Ultraschallwandler anzuschließen. Dadurch wird die Montage des Wandlers wesentlich vereinfacht.

Figur 2 zeigt einen Schallwandler, bei welchem das gesamte Wandlergehäuse, also zylinderförmige Wand 14 und Gehäuseboden 15, aus Aluminiumoxid bestehen. Da dieses Material elektrisch isoliert, entfällt eine zusätzliche Isolierschicht und eine Metallisierung 16 kann direkt auf der Innenwand des Gehäuses aufgebracht werden. In diesem Fall ist nur eine akustische Koppelschicht 17 zwischen der abstrahlseitigen Elektrode 18, der Piezoscheibe 19 und der Metallisierung 16 des Gehäuses erforderlich. Dies wirkt sich günstig auf die akustischen Eigenschaften des Schallwandlers aus. Zudem besitzt das Gehäuse aus Keramik eine ähnliche thermische Ausdehnung wie die keramische Piezoscheibe 19, so daß Temperaturschwankungen kaum zu mechanischen Spannungen an der akustischen Koppelschicht 17 führen. Weitere in Figur 2 nicht dargestellte Bestandteile des Schallwandlers können ähnlich wie bei dem Schallwandler nach Figur 1 ausgeführt sein.

Ein Wandler gemäß Figur 3 besitzt eine zylinderförmige Gehäusewand 20 aus Metall, in die ein Gehäuseboden 21 aus keramischem Material eingesetzt ist. Da lediglich die Gehäusewand 20 elektrisch leitend ist, muß nur diese vor dem Aufbringen einer Metallisierung 22 mit einer Isolierschicht 23 versehen werden.

Wenn auch eine Gehäusewand 24, wie in Figur 4 gezeigt, aus einem elektrisch isolierenden Material ausgeführt ist, kann auch die Isolierschicht zwischen Metallisierung 25 und Gehäusewand 24 weggelassen werden. Wiederum ist ein Gehäuseboden 26 aufgrund der guten Resistenz gegenüber aggressiven Stoffen aus Keramik, z. B. Aluminiumoxid, ausgeführt. Da der Gehäuseboden 26 die Gehäusewand 24 gegenüber den aggressiven Stoffen vollständig abdeckt, kann für die Gehäusewand 24 ein Material mit vergleichsweise geringer Schwingungsgüte, hoher akustischer Dämpfung und guten Fertigungseigenschaften ausgewählt werden.

## Patentansprüche

1. Schallwandler, insbesondere Ultraschallwandler,
- mit einem becherförmigen Gehäuse (1, 2), dessen Innenwand im wesentlichen elektrisch isoliert,
- mit einer am Becherboden (2) des Gehäuses angeordneten Piezoscheibe (4),
- mit einer ersten Elektrode (5) und einer zweiten Elektrode (6), die flächenhaft im Bereich der Oberseite bzw. im Bereich der in Schallausbreitungsrichtung zu einem Meßmedium weisenden Unterseite der Piezoscheibe (4) ausgebildet sind und in welche über Signalleitungen (7, 8) ein elektrisches Signal einkoppelbar ist,
**dadurch gekennzeichnet**,
- daß ein elektrischer Leiter (10), welcher die Innenwand des Gehäuses (1, 2) im wesentlichen bedeckt, die zweite Elektrode oder zumindest ein Mittel zur Einkopplung des elektrischen Signals von einer Signalleitung (8) in die zweite Elektrode (6) bildet.

2. Schallwandler nach Anspruch 1, **dadurch gekennzeichnet**,
- daß das becherförmige Gehäuse (1, 2) aus Metall besteht und
- daß sich zwischen Gehäuseinnenwand und dem elektrischen Leiter (10) ein elektrischer Isolator (9) befindet.

3. Schallwandler nach Anspruch 2, **dadurch gekennzeichnet**,
- daß der elektrische Isolator (9) durch eine Beschichtung der Gehäuseinnenwand mit elektrisch isolierendem Material gebildet wird.

4. Schallwandler nach Anspruch 3, **dadurch gekennzeichnet**,
- daß die Beschichtung aus einer in Spritztechnik aufgebrachten Oxidkeramik, vorzugsweise Aluminiumoxid, besteht.

5. Schallwandler nach Anspruch 4, **dadurch gekennzeichnet**,
- daß die Dicke der Beschichtung zwischen 10 µm und 500 µm liegt.

6. Schallwandler nach Anspruch 1, **dadurch gekennzeichnet**,
- daß das becherförmige Gehäuse (14, 15) aus elektrisch isolierendem Material besteht.

7. Schallwandler nach Anspruch 6, **dadurch gekennzeichnet**,
- daß das elektrisch isolierende Material Keramik, insbesondere Aluminiumoxid, ist.

8. Schallwandler nach Anspruch 1, **dadurch gekennzeichnet**,
- daß der Boden (26) des becherförmigen Gehäuses (24, 26) aus Keramik, insbesondere Aluminiumoxid, und die Gehäusewand (24) aus einem Material mit geringer Schwingungsgüte und hoher akustischer Dämpfung, insbesondere Sintermetall, Plasmakeramik oder einem temperaturfesten Kunststoff, besteht.

9. Schallwandler nach einem der vorhergehenden Ansprüche, **dadurch gekennzeichnet**,
- daß über der Piezoscheibe (4) Mittel (11) zur elektromagnetischen Abschirmung vorhanden sind, welche mit dem elektrischen Leiter (10) im Bereich der Seitenwand des becherförmigen Gehäuses (1, 2) elektrisch verbunden sind.

10. Schallwandler nach Anspruch 9, **dadurch gekennzeichnet**,
- daß zur elektromagnetischen Abschirmung ein Metallgewebe (11) in ein Backing (12), insbesondere ein mit Metalloxidpulver aufgefülltes Epoxidharz, eingebettet ist.

11. Schallwandler nach einem der vorhergehenden Ansprüche, **dadurch gekennzeichnet**,
- daß der elektrische Leiter (10) durch eine Metallisierung der Innenwand des Gehäuses (1, 2) gebildet wird.

12. Schallwandler nach Anspruch 11, **dadurch gekennzeichnet**,
- daß die Metallisierung (10) durch Bedampfen oder Sputtern aufgebracht ist, wobei die Dicke mehr als 100 nm beträgt.

13. Schallwandler nach einem der vorhergehenden Ansprüche, **dadurch gekennzeichnet**,
- daß die Signalleitungen (7, 8) durch Lötverbindungen an die erste Elektrode (5) bzw. den elektrischen Leiter (10) angeschlossen sind.
